# EUROPEAN PATENT APPLICATION

(11) **EP 4 411 665 A1**
(43) Date of publication of application: **07.08.2024**
(21) Application number: 23154988.2
(22) Date of filing: 03.02.2023
(51) Int. Cl.: G06V 10/143, G06V 10/70, G06V 10/774, G06V 10/82, G06T 5/00

(54) **SWITCHGEAR MONITORING APPARATUS**

(71) Applicant: ABB SCHWEIZ AG, 5400 Baden (CH)
(72) Inventor: GITZEL, Ralf, 68165 Mannheim (DE); MIGUNOV, Vadim, 68526 Ladenburg (DE); ALLADI, Venkata Ravikumar, 560048 Hoodi, Bengaluru (IN)
(74) Representative: Maiwald GmbH

(57) **Abstract**

The present invention relates to a switchgear monitoring apparatus (10), comprising:
- an input unit (20);
- a processing unit (30); and
- an output unit (40);
wherein the input unit is configured to provide a first infrared image of one or more parts of a switchgear to the processing unit, wherein the first infrared image of the one or more parts of the switchgear has a first resolution;
wherein the processing unit is configured to determine a second infrared image of the one or more parts of the switchgear from the first infrared image, wherein the second infrared image has a second resolution greater than the first resolution, wherein the determination of the second infrared image comprises utilization of a machine learning algorithm applied to data of the first infrared image, and wherein the machine learning algorithm was trained comprising utilization of visual light images; and
wherein the output unit is configured to output the second infrared image.

## Description

### FIELD OF THE INVENTION

The present invention relates to a switchgear monitoring apparatus, a switchgear monitoring system, switchgear monitoring methods, computer program elements, and computer readable media.

### BACKGROUND OF THE INVENTION

Electrical equipment such as switchgear can suffer from small faults that change the electrical resistance of the system. These faults manifest as hot spots and can ultimately lead to catastrophic failures. Here a switchgear can be a high voltage, medium voltage, or low voltage switchgear.

One solution is to monitor parts of the switchgear, such as the phases, with an infrared thermographic camera to detect the hot spots. This is because infrared (IR) images can be used to identify technical problems within electrical equipment (e.g. switchgear) that lead to the overheating of components and to identify the hot spots themselves.

The infrared thermographic cameras detect the infrared radiation that is emitted by objects. Taking into account some other factors, infrared thermographic (IRT) images allow a good estimation of the temperature of an object.

However, infrared thermographic cameras are expensive, so budget-limited projects need to use low-resolution cameras.

One drawback of low-resolution cameras is that the temperature of elements that are smaller than one pixel (e.g. cables) is underestimated. In applications like condition monitoring a temperature underestimation is problematic because it might miss hot spots.

There is a need to address this issue.

### SUMMARY OF THE INVENTION

Therefore, it would be advantageous to have an improved technique for monitoring a switch gear.

The object of the present invention is solved with the subject matter of the independent claims, wherein further embodiments are incorporated in the dependent claims.

In a first aspect, there is provided a switchgear monitoring apparatus, comprising:
- an input unit;
- a processing unit; and
- an output unit.
The input unit is configured to provide a first infrared image of one or more parts of a switchgear to the processing unit. The first infrared image of the one or more parts of the switchgear has a first resolution. The processing unit is configured to determine a second infrared image of the one or more parts of the switchgear from the first infrared image. The second infrared image has a second resolution greater than the first resolution. The determination of the second infrared image comprises utilization of a machine learning algorithm applied to data of the first infrared image. The machine learning algorithm was trained comprising utilization of visual light images. The output unit is configured to output the second infrared image.

In an example, the determination of the second infrared image comprises a conversion of the first infrared image into a greyscale first image or a false colour first image. The data of the first infrared image is the greyscale first image or the false colour first image.

In an example, the greyscale first image or the false colour first image is of a same format as the visual light images used in training the machine learning algorithm.

In an example, the utilization of the machine learning algorithm applied to the data of the first infrared image comprises a generation of data of the second infrared image. The determination of the second infrared image comprises a conversion of the data of the second infrared image into the second infrared image.

In an example, the data of the second infrared image is a greyscale second image or a false colour second image.

In an example, the greyscale second image or the false colour second image is of a same format as the visual light images used in training the machine learning algorithm.

In a second aspect, there is provided a switchgear monitoring system, comprising:
- an infrared camera;
- a processing unit; and
- an output unit.
The infrared camera is configured to acquire a first infrared image of one or more parts of a switchgear to the processing unit. The first infrared image of the one or more parts of the switchgear has a first resolution. The infrared camera is configured to provide the first infrared image to the processing unit. The processing unit is configured to determine a second infrared image of the one or more parts of the switchgear from the first infrared image. The second infrared image has a second resolution greater than the first resolution. The determination of the second infrared image comprises utilization of a machine learning algorithm applied to data of the first infrared image. The machine learning algorithm was trained comprising utilization of visual light images. The output unit is configured to output the second infrared image.

In an example, the determination of the second infrared image comprises a conversion of the first infrared image into a greyscale first image or a false colour first image. The data of the first infrared image is the greyscale first image or the false colour first image.

In an example, the greyscale first image or the false colour first image is of a same format as the visual light images used in training the machine learning algorithm.

In an example, the utilization of the machine learning algorithm applied to the data of the first infrared image comprises generation of data of the second infrared image. The determination of the second infrared image comprises a conversion of the data of the second infrared image into the second infrared image.

In an example, the data of the second infrared image is a greyscale second image or a false colour second image.

In an example, the greyscale second image or the false colour second image is of a same format as the visual light images used in training the machine learning algorithm.

In a third aspect, there is provided a switchgear monitoring method, comprising:
- providing a first infrared image of one or more parts of a switchgear to a processing unit, wherein the first infrared image of the one or more parts of the switchgear has a first resolution;
- determining by the processing unit a second infrared image of the one or more parts of the switchgear from the first infrared image, wherein the second infrared image has a second resolution greater than the first resolution, wherein the determining the second infrared image comprises utilizing a machine learning algorithm applied to data of the first infrared image, and wherein the machine learning algorithm was trained comprising utilization of visual light images; and
- outputting by an output unit the second infrared image.

In a fourth aspect, there is provided a switchgear monitoring method, comprising:
- acquiring by an infrared camera a first infrared image of one or more parts of a switchgear to the processing unit, wherein the first infrared image of the one or more parts of the switchgear has a first resolution;
- providing by the infrared camera the first infrared image to the processing unit;
- determining by the processing unit a second infrared image of the one or more parts of the switchgear from the first infrared image, wherein the second infrared image has a second resolution greater than the first resolution, wherein the determination of the second infrared image comprises utilization of a machine learning algorithm applied to data of the first infrared image, and wherein the machine learning algorithm was trained comprising utilization of visual light images; and
- outputting by an output unit the second infrared image.

In an aspect, there is provided a computer program element for controlling an apparatus according to the first aspect which when executed by a processor is configured to carry out the method of the third aspect.

In an aspect, there is provided a computer program element for controlling a system according to the second aspect which when executed by a processor is configured to carry out the method of the fourth aspect.

Thus, according to aspects, there is provided computer program elements controlling one or more of the apparatus/systems as previously described which, if the computer program element is executed by a processor, is adapted to perform the method as previously described.

According to another aspect, there is provided computer readable media having stored the computer elements as previously described.

The computer program element can for example be a software program but can also be a FPGA, a PLD or any other appropriate digital means.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic representation of a switchgear monitoring apparatus;
Fig. 2 shows a schematic representation of a switchgear monitoring system;
Fig. 3 shows a schematic representation of a switchgear monitoring method;
Fig. 4 shows a schematic representation of a switchgear monitoring method;
Fig. 5 shows a low resolution image of one or more parts of a switchgear;
Fig. 6 shows a super-resolution image of the one or more parts of the switchgear shown in Fig. 5; and
Fig. 7 shows a pictorial representation of the correction of temperature underestimation.

### DETAILED DESCRIPTION OF EMBODIMENTS

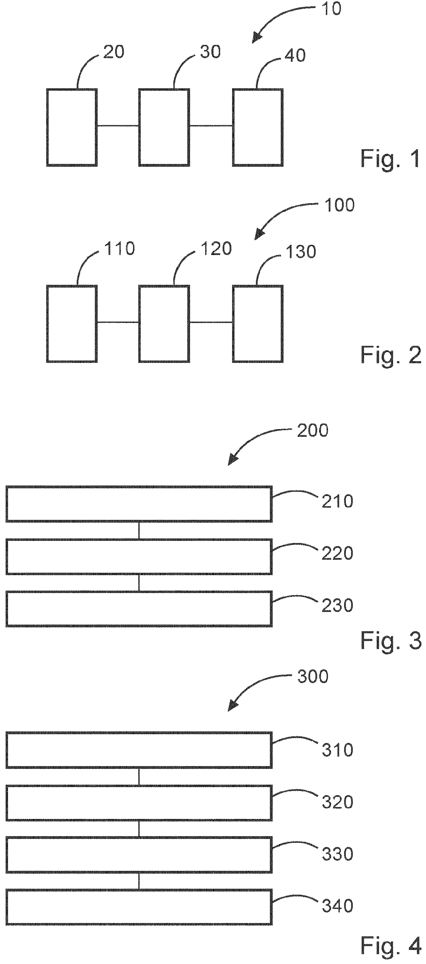

Fig. 1 shows an example of a switchgear monitoring apparatus 10, comprising:
- an input unit 20;
- a processing unit 30; and
- an output unit 40.
The input unit is configured to provide a first infrared image of one or more parts of a switchgear to the processing unit. The first infrared image of the one or more parts of the switchgear has a first resolution. The processing unit is configured to determine a second infrared image of the one or more parts of the switchgear from the first infrared image. The second infrared image has a second resolution greater than the first resolution. The determination of the second infrared image comprises utilization of a machine learning algorithm applied to data of the first infrared image. The machine learning algorithm was trained comprising utilization of visual light images. The output unit is configured to output the second infrared image.

According to an example, the determination of the second infrared image comprises a conversion of the first infrared image into a greyscale first image or a false colour first image. The data of the first infrared image is the greyscale first image or the false colour first image.

According to an example, the greyscale first image or the false colour first image is of a same format as the visual light images used in training the machine learning algorithm.

According to an example, the utilization of the machine learning algorithm applied to the data of the first infrared image comprises generation of data of the second infrared image. The determination of the second infrared image comprises a conversion of the data of the second infrared image into the second infrared image.

According to an example, the data of the second infrared image is a greyscale second image or a false colour second image.

According to an example, the greyscale second image or the false colour second image is of a same format as the visual light images used in training the machine learning algorithm.

In an example, the machine learning algorithm is a super resolution convolutional neural network, SRCNN, or enhanced deep super resolution network, EDSRN.

Fig. 2 shows an example of a switchgear monitoring system 100, comprising:
- an infrared camera 110;
- a processing unit 120; and
- an output unit 130.
The infrared camera is configured to acquire a first infrared image of one or more parts of a switchgear to the processing unit. The first infrared image of the one or more parts of the switchgear has a first resolution. The infrared camera is configured to provide the first infrared image to the processing unit. The processing unit is configured to determine a second infrared image of the one or more parts of the switchgear from the first infrared image, The second infrared image has a second resolution greater than the first resolution. The determination of the second infrared image comprises utilization of a machine learning algorithm applied to data of the first infrared image. The machine learning algorithm was trained comprising utilization of visual light images. The output unit is configured to output the second infrared image.

According to an example, the determination of the second infrared image comprises a conversion of the first infrared image into a greyscale first image or a false colour first image. The data of the first infrared image is the greyscale first image or the false colour first image.

According to an example, the greyscale first image or the false colour first image is of a same format as the visual light images used in training the machine learning algorithm.

According to an example, the utilization of the machine learning algorithm applied to the data of the first infrared image comprises generation of data of the second infrared image. The determination of the second infrared image comprises a conversion of the data of the second infrared image into the second infrared image.

According to an example, the data of the second infrared image is a greyscale second image or a false colour second image.

According to an example, the greyscale second image or the false colour second image is of a same format as the visual light images used in training the machine learning algorithm.

In an example, the machine learning algorithm is a super resolution convolutional neural network, SRCNN, or enhanced deep super resolution network, EDSRN.

Fig. 3 shows a switchgear monitoring method 200, comprising:
- providing 210 a first infrared image of one or more parts of a switchgear to a processing unit, wherein the first infrared image of the one or more parts of the switchgear has a first resolution;
- determining 220 by the processing unit a second infrared image of the one or more parts of the switchgear from the first infrared image, wherein the second infrared image has a second resolution greater than the first resolution, wherein the determining the second infrared image comprises utilizing a machine learning algorithm applied to data of the first infrared image, and wherein the machine learning algorithm was trained comprising utilization of visual light images; and
- outputting 230 by an output unit the second infrared image.

In an example, the determining the second infrared image comprises converting the first infrared image into a greyscale first image or a false colour first image, and wherein the data of the first infrared image is the greyscale first image or the false colour first image.

In an example, the greyscale first image or the false colour first image is of a same format as the visual light images used in training the machine learning algorithm.

In an example, the utilizing the machine learning algorithm applied to the data of the first infrared image comprises generating data of the second infrared image, and wherein the determining the second infrared image comprises converting the data of the second infrared image into the second infrared image.

In an example, the data of the second infrared image is a greyscale second image or a false colour second image.

In an example, the greyscale second image or the false colour second image is of a same format as the visual light images used in training the machine learning algorithm.

In an example, the machine learning algorithm is a super resolution convolutional neural network, SRCNN, or enhanced deep super resolution network, EDSRN.

Fig. 4 shows a switchgear monitoring method 300, comprising:
- acquiring 310 by an infrared camera a first infrared image of one or more parts of a switchgear to the processing unit, wherein the first infrared image of the one or more parts of the switchgear has a first resolution;
- providing 320 by the infrared camera the first infrared image to the processing unit;
- determining 330 by the processing unit a second infrared image of the one or more parts of the switchgear from the first infrared image, wherein the second infrared image has a second resolution greater than the first resolution, wherein the determination of the second infrared image comprises utilization of a machine learning algorithm applied to data of the first infrared image, and wherein the machine learning algorithm was trained comprising utilization of visual light images; and
- outputting 340 by an output unit the second infrared image.

In an example, the determining the second infrared image comprises converting the first infrared image into a greyscale first image or a false colour first image, and wherein the data of the first infrared image is the greyscale first image or the false colour first image.

In an example, the greyscale first image or the false colour first image is of a same format as the visual light images used in training the machine learning algorithm.

In an example, the utilizing the machine learning algorithm applied to the data of the first infrared image comprises generating data of the second infrared image, and wherein the determining the second infrared image comprises converting the data of the second infrared image into the second infrared image.

In an example, the data of the second infrared image is a greyscale second image or a false colour second image.

In an example, the greyscale second image or the false colour second image is of a same format as the visual light images used in training the machine learning algorithm.

In an example, the machine learning algorithm is a super resolution convolutional neural network, SRCNN, or enhanced deep super resolution network, EDSRN.

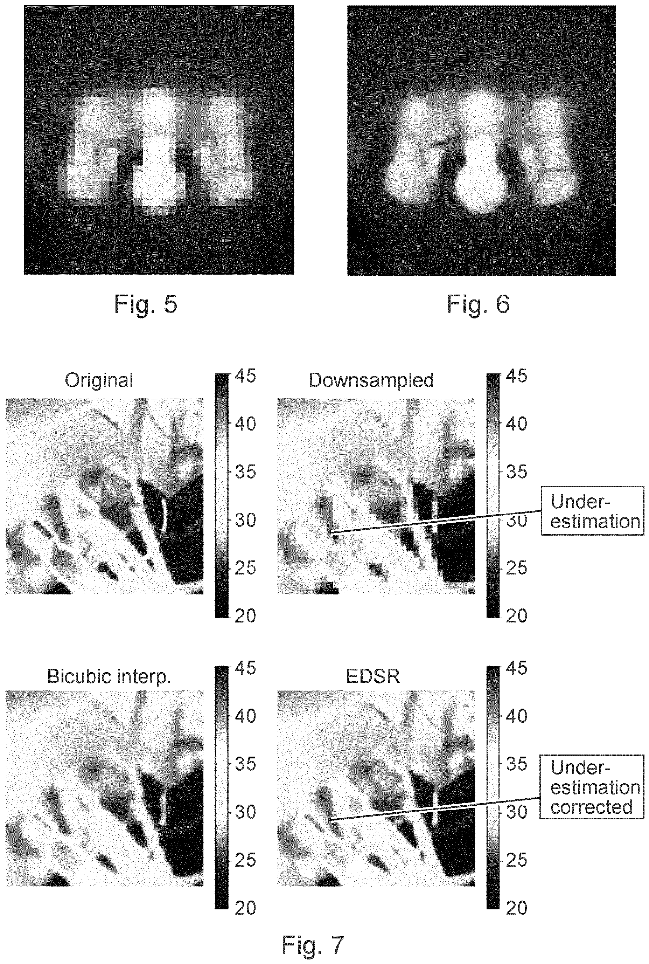

The switchgear monitoring apparatus, switchgear monitoring system, and switchgear monitoring methods are now described in specific detail, where reference is made to Figs. 5-7.

The inventors were aware that super resolution Imaging (SR) has successfully used neural networks and for example bicubic interpolation to enhance the resolution of an image. SR is applied to visual-light images with great success but further development is required to successfully apply this technique to infrared images. The inventors developed a SR technique to infrared images. Unlike in the visual spectrum, SR in this context not only offers a "cosmetic improvement" but actually corrects temperature underestimations of sub-pixel-sized regions.

As discussed above, super resolution algorithms for visual light images already exist. One example are neural networks such as the SRCNN (Super Resolution Convolutional Neural Network) or EDSR (enhanced deep super-resolution network).

These networks are trained on visual light images and show good results for this domain.

The inventors realized that such a technique could be utilized in the infrared domain in order to enhance the resolution of an infrared image of a switchgear enabling temperatures of objects in a low resolution image that occupy less than one pixel, and have an incorrect low temperature, in order that a correct temperature of this objects can be determined.

The new approach is to:
First, take the infrared image of the switchgear (a matrix of temperature values as floats). Such an image is shown in Fig. 5.
Second, convert it into a greyscale image or a false color image.
Third, a pretrained neural network (trained on visual light images) is applied to the images as if they were regular photos.
Fourth, the output images are converted back to temperatures allowing a temperature estimate.

Thus, easily available high resolution visible images of a switchgear, or other high resolution images for example high resolution images of other industrial systems or devices or pieces of equipment, are used to train a SR algorithm such as a SRCNN or EDSRN. The high resolution visible images are in effect also converted to low resolution visible images within the training process. Then an initial low resolution infrared image of a part of a switchgear that is being monitored, that has pixel temperature values, is in effect converted into a low resolution form that the SR algorithm can process (the form of the low resolution images it was trained with). The SR algorithm can then produce an output image that has a higher resolution and the values in this high resolution image can be converted back into temperature values to provide a high resolution version of the initial low resolution infrared image.

In another exemplary embodiment, a computer program or computer program element is provided that is characterized by being configured to execute the method steps of any of the methods according to one of the preceding embodiments, on an appropriate apparatus or system.

The computer program element might therefore be stored on a computer unit, which might also be part of an embodiment. This computing unit may be configured to perform or induce performing of the steps of the method described above. Moreover, it may be configured to operate the components of the above-described system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A switchgear monitoring apparatus (10), comprising:
- an input unit (20);
- a processing unit (30); and
- an output unit (40);
wherein the input unit is configured to provide a first infrared image of one or more parts of a switchgear to the processing unit, wherein the first infrared image of the one or more parts of the switchgear has a first resolution;
wherein the processing unit is configured to determine a second infrared image of the one or more parts of the switchgear from the first infrared image, wherein the second infrared image has a second resolution greater than the first resolution, wherein the determination of the second infrared image comprises utilization of a machine learning algorithm applied to data of the first infrared image, and wherein the machine learning algorithm was trained comprising utilization of visual light images; and
wherein the output unit is configured to output the second infrared image.

2. Apparatus according to claim 1, wherein the determination of the second infrared image comprises a conversion of the first infrared image into a greyscale first image or a false colour first image, and wherein the data of the first infrared image is the greyscale first image or the false colour first image.

3. Apparatus according to claim 2, wherein the greyscale first image or the false colour first image is of a same format as the visual light images used in training the machine learning algorithm.

4. Apparatus according to any of claims 1-3, wherein the utilization of the machine learning algorithm applied to the data of the first infrared image comprises generation of data of the second infrared image, and wherein the determination of the second infrared image comprises a conversion of the data of the second infrared image into the second infrared image.

5. Apparatus according to claim 4, wherein the data of the second infrared image is a greyscale second image or a false colour second image.

6. Apparatus according to claim 5, wherein the greyscale second image or the false colour second image is of a same format as the visual light images used in training the machine learning algorithm.

7. A switchgear monitoring system (100), comprising:
- an infrared camera (110);
- a processing unit (120); and
- an output unit (130);
wherein the infrared camera is configured to acquire a first infrared image of one or more parts of a switchgear to the processing unit, wherein the first infrared image of the one or more parts of the switchgear has a first resolution;
wherein the infrared camera is configured to provide the first infrared image to the processing unit;
wherein the processing unit is configured to determine a second infrared image of the one or more parts of the switchgear from the first infrared image, wherein the second infrared image has a second resolution greater than the first resolution, wherein the determination of the second infrared image comprises utilization of a machine learning algorithm applied to data of the first infrared image, and wherein the machine learning algorithm was trained comprising utilization of visual light images; and
wherein the output unit is configured to output the second infrared image.

8. System according to claim 7, wherein the determination of the second infrared image comprises a conversion of the first infrared image into a greyscale first image or a false colour first image, and wherein the data of the first infrared image is the greyscale first image or the false colour first image.

9. System according to claim 8, wherein the greyscale first image or the false colour first image is of a same format as the visual light images used in training the machine learning algorithm.

10. System according to any of claims 7-9, wherein the utilization of the machine learning algorithm applied to the data of the first infrared image comprises generation of data of the second infrared image, and wherein the determination of the second infrared image comprises a conversion of the data of the second infrared image into the second infrared image.

11. System according to claim 10, wherein the data of the second infrared image is a greyscale second image or a false colour second image.

12. System according to claim 11, wherein the greyscale second image or the false colour second image is of a same format as the visual light images used in training the machine learning algorithm.

13. A switchgear monitoring method (200), comprising:
providing (210) a first infrared image of one or more parts of a switchgear to a processing unit, wherein the first infrared image of the one or more parts of the switchgear has a first resolution;
determining (220) by the processing unit a second infrared image of the one or more parts of the switchgear from the first infrared image, wherein the second infrared image has a second resolution greater than the first resolution, wherein the determining the second infrared image comprises utilizing a machine learning algorithm applied to data of the first infrared image, and wherein the machine learning algorithm was trained comprising utilization of visual light images; and
outputting (230) by an output unit the second infrared image.

14. A switchgear monitoring method (300), comprising:
acquiring (310) by an infrared camera a first infrared image of one or more parts of a switchgear to the processing unit, wherein the first infrared image of the one or more parts of the switchgear has a first resolution;
providing (320) by the infrared camera the first infrared image to the processing unit;
determining (330) by the processing unit a second infrared image of the one or more parts of the switchgear from the first infrared image, wherein the second infrared image has a second resolution greater than the first resolution, wherein the determination of the second infrared image comprises utilization of a machine learning algorithm applied to data of the first infrared image, and wherein the machine learning algorithm was trained comprising utilization of visual light images; and
outputting (340) by an output unit the second infrared image.

15. A computer program element for controlling an apparatus according to any of claims 1-6 which when executed by a processor is configured to carry out the method of claim 13, or for controlling a system according to any of claims 7-12 which when executed by a processor is configured to carry out the method of claim 14.
